# EUROPEAN PATENT SPECIFICATION

(11) **EP 2 021 118 B1**
(45) Date of publication and mention of the grant of the patent: **03.04.2013**
(21) Application number: 07730767.6
(22) Date of filing: 16.05.2007
(51) Int. Cl.: B01J 8/00, F22B 31/00, F22B 37/24, F23C 10/18, F23C 10/10

(54) **CYCLONE-SEPARATOR ARRANGEMENT FOR A FLUIDIZED BED BOILER AND MOUNTING CONSTRUCTION**
ANORDNUNG UND BEFESTIGUNG VON ZYKLON-ABSCHEIDERN FÜR DAS WIRBELGUT EINES WIRBELSCHICHTREAKTORS
MONTAGE DE SÉPARATEUR D'UNE CHAUDIÈRE À LIT FLUIDISÉ

(30) Priority: 19.05.2006 FI 20060492
(43) Date of publication of application: 11.02.2009
(73) Proprietor: Foster Wheeler Energia Oy, 02130 Espoo (FI)
(72) Inventor: LANKINEN, Pentti, 78850 Varkaus (FI)
(74) Representative: Salonen, Kauko Tuomas
(86) International application number: PCT/FI2007/050280
(87) International publication number: WO 2007/135238

(56) References cited:
- WO-A-01/65175
- WO-A-91/19940
- WO-A-2004/048849
- JP-A- 5 126 303
- US-A- 5 281 398
- US-A- 5 489 166

## Description

The present invention relates to a separator construction connectable to a fluidized bed boiler. The invention especially relates to suspending of the separator to be used in connection with such a power boiler

The fluidized bed boilers related to the present invention and more accurately the components thereof are equipped with so called water/steam tube walls which literally consist of parallel water/steam tubes and plate-like fins between the tubes. The purpose of the water or steam circulating in the water/steam tubes is, depending on the application, mainly to recover heat generating in combustion or to maintain the wall temperature within reasonable values. As for their strength, such water/steam tube walls are in view of their size relatively weak, so they cannot be used to bear directly the stresses caused by the weight of the boiler or of the components thereof, the pressure of the combustion space or thermal expansion, perhaps notwithstanding the direction of the tubes, but, for example, different beam structures are used to support the boiler and different structural parts thereof.

Mainly due to the thermal expansion, large fluidized bed boilers with all their structural elements are suspended to hang from the supporting structures of the boiler building. In other words, both the furnace and the separators removing solid material from the flue gases and attached thereto, have conventionally been mounted by means of hanger rods or wires to the supporting structures of the boiler building. More accurately, in constructions in accordance with the prior art the furnace has been suspended in the manner described above directly to the supporting structures, but mainly two methods have been used in supporting the separators depending on how the separator and the flue gas channel passing the flue gases forward therein are arranged relative to each other. An arrangement used more often is to provide each separator with a flue gas channel of its own leading, when viewed from the direction of the furnace, away from the separator. In this case, the separator can be suspended to hang directly from its walls to primary steel structures above the separator. This has been generally realized by arranging hanger rods to the circumference of the separator at intervals of 400 mm, which results in using 15 to 25 hanger rods, naturally depending on the size of the separator. Another method used especially in large fluidized bed boilers to arrange a flue gas channel in communication with a separator, is, first of all, to arrange separators to opposite sides of the furnace and to arrange a common flue gas channel for the separators to both sides of the furnace. The flue gas channel is naturally situated above the separators. The separators of this arrangement are suspended to the supporting structures by means of the flue gas channel located above them. In principle, the structure is quite applicable. However, with the increase of the size of the power boilers and at the same time of the separators and with the change in their shape, a number of problems has arisen.
A fluidized bed boiler and a separator connected thereto are shown by document WO 01/65175.

First of all, the separators used with the fluidized bed boilers are vortex separators in their operational principle and traditionally they have been circular in their cross-section. During the last decade, the shape of these separators started to change to quadrate, whereby their mounting to the flue gas channel became easier. There, it was possible to hang the separators either from all sides to the supporting structure above, in other words to a so called primary steel structure by means of hanger rods, or if the separator was first assembled to the flue gas channel, it was possible to use the whole wall of the flue gas channel as a supporting line. Recently, the cross-sectional shape of the separators has become to a certain extent rounder, and octagonal separators have become really popular in the market. With this shape, especially with large separators, it is no more possible to support the separator to the primary steel structure nor to the bottom of the flue gas channel. When supporting the separator directly to the primary steel structure, the problem will be that there are a number of walls that are in angular position relative to the primary steel structure lacking a beam above in the primary steel structure, and thus a place where to hang the separator.

A fact in practice in joining the separators to the flue gas channel, which was in fact referred to already above, is that it is not possible to arrange the bottom of the flue gas channel to support heavy separators, but the only possible supporting areas in the flue gas channel are the vertical sidewalls thereof. It has been noted, however, that large, not right-angled separators do not have enough load carrying areas (lines) between the circumference of the separator and the wall line of the flue gas channel. In practice, this means that, for example, one third or one fourth of the circumferential length of the separator (depending on whether the separator is hexagonal or octagonal) supports the weight of the whole separator and the sand and ash therein, which in turn leads to too heavy local stresses. Exactly in the same way, when the separators change to non-rectangular only part of the sidewalls of the flue gas channel directly bears the weight of the separators. Theoretically, with hexagonal separators, about 50% of the length of the sidewall of the flue gas channel in maximum and with octagonal separators only about 40% of the length of the sidewall of the flue gas channel bears the load directly.

Secondly, since large boilers have separators practically speaking always on both sides of the furnace, the flue gas cleaned by separators should be taken from the separators via as short route as possible to the heat recover section of the fluidized bed boiler, and to minimize the construction costs and the pressure losses. On the one hand, this means that the heat recovery section must be arranged as an extension of the furnace on one of its two sides left free and, on the other hand, that the flue gases from both sides of the furnace must be brought to the heat recovery section via as short route as possible. The result of this is that the flue gas channels must be brought above the separators to the end of the separator bank and drawn further to the heat recovery section.

It has been noted that one of the problems with this arrangement is that the maximum width of the flue gas channel with the present separator supporting methods may be equal to the diameter of the separator. In some arrangements even a smaller width of the flue gas channel has been used, but it has proved especially problematic, because a fact is that the cross-section of the flue gas channel has to be large enough so that the flue gases can flow without any substantial pressure loss in the heat recovery section. In other words, if the width of the flue gas channel is limited, the required cross-section must be gained by increasing the height of the channel. This, however, instantly increases the total height of the building. The same problem is to be seen in cases where the width of the flue gas channel is limited to the diameter of the separator, especially when talking about large boilers, whereby there are a lot of separators on both sides of the furnace. This naturally leads to a need for a large cross sectional flow area.

Thirdly, it has been impossible to define the weight of the separator and also the weight of sand and ash therein when using the constructions in accordance with the prior art by measuring, because there have always been a large number of hanger rods. They have sometimes been positioned between the flue gas channel and supporting structures, too, whereby the flue gas channel has in a way tied all separators to one package.

An additional problem related to a large number of hanger rods is that it has been in practice very difficult, if not impossible, to arrange the supporting of the separator in such a way that all hanger rods are subject to the same load. Rather, in conventional suspension some of the rods carry very little weight, whereas others already yield under the weight.

Thus, it is an object of the invention to arrange the supporting of the separator in such a way that the harmful effects of the above mentioned problems can be diminished.

In order to solve the above identified problems of the prior art, it is characteristic of the separator construction of a fluidized bed boiler, the structure of which separator comprises separator walls and supporting means to be connected to the supporting structure of the separator up above in the boiler building, that the supporting means are formed of a frame arranged to the upper circumferential edge of the separator wall and hanger rods or wires attaching the frame to the supporting structures.

Other characterizing features of the separator construction of a fluidized bed reactor in accordance with the invention become evident in the accompanying claims.

In other words, the separators is suspended to hang at the level of the furnace ceiling by means of a separate secondary steel structure. It is possible to design the structure in such a way that the hanger means connected to the separator will be evenly distributed to the outer periphery of the panel structure. Problems noticed in structures designed with the conventional supporting method may be solved, for example, in the following way:
● too heavy local loads may be eliminated because the suspension may be extended to the whole periphery of the separator,
● the stresses the flue gas channel is subjected to due to the weight of the separator and the ash and sand therein, will be eliminated completely, because the separator is supported directly to the primary steel structures,
● no difference in thermal expansion occurs in the supporting level between the furnace and the separator, which facilitates the design of the structures,
● the structure of the flue gas channel above the separator, in other words the size and shape thereof can be designed freely,
● the flue gas channel above the separator is supported by means of a secondary steel structure from below,
● the secondary steel structure is supported by means of separate hanger rods,
● it is easy to measure the changing weight (sand, ash) of the separator and the flue gas channel thereabove with the help of the hanger rods, whereby the operating method of the boiler can be changed, if too much sand/ash accumulates to the separator; and
● the supporting steel structures and foundations of the separator and the boiler can be designed for smaller weight, whereby savings are gained in construction costs, too.

A separator construction in accordance with the invention is discussed more in detail below with reference to the accompanying drawings, in which
Fig. 1 schematically illustrates a sectional side view of fluidized bed boiler in accordance with prior art,
Fig. 2 schematically illustrates a sectional top view of a separator construction in accordance with prior art,
Fig. 3 illustrates a side view of a separator construction in accordance with Fig. 2,
Fig. 4 illustrates a top view of a separator construction in accordance with a preferred embodiment of the invention, and
Fig. 5 illustrates a side view of a separator construction in accordance with Fig. 4.

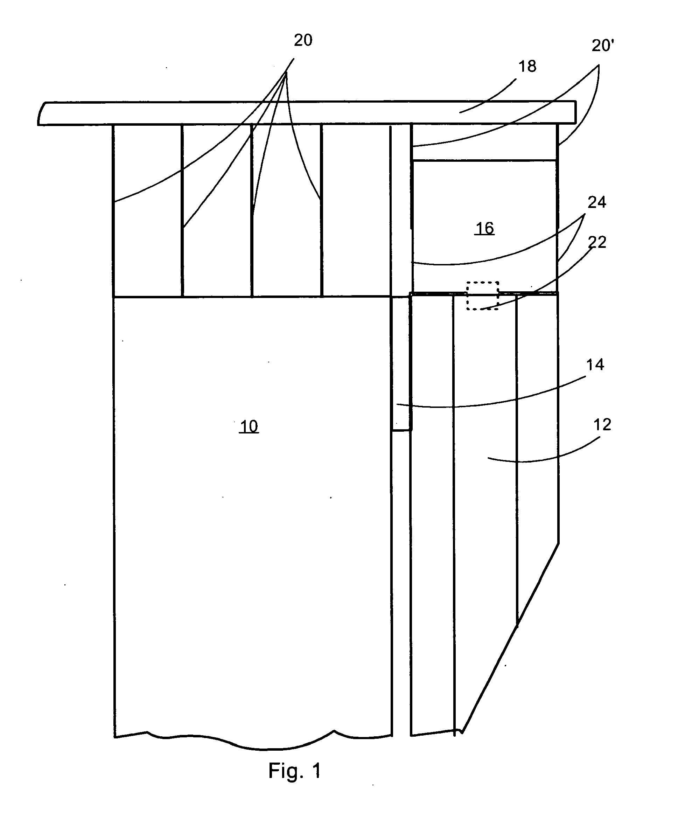

A fluidized bed boiler in accordance with prior art disclosed in Fig. 1 as a partially sectional view comprises, as for the parts illustrated in the drawing, a furnace 10, one or more separators 12 located on one side or both sides of the furnace, a flue gas conduit 14 connecting them, a flue gas channel 16 located above the separator/separators 12 and a supporting structure 18, i.e. a so called primary steel structure located in the upper part of the boiler building. Both the furnace 10 and the flue gas channel 16 are suspended with hanger rods or wires 20 from the supporting structure. Furthermore, the figure also illustrates a conduit 22 preferably located at the centerline of the separator and leading from the separator 12 to the flue gas channel 16, from which conduit the flue gases having the solid material separated therefrom in the separator 12 rise to the flue gas channel 16. In the arrangement in accordance with prior art illustrated in the drawing, the flue gas channel 16 is suspended directly by means of suspending means 20' to the supporting structures 18 thereabove, i.e. to the primary steel structures and the separator/separators 12 in turn are attached to the flue gas channel 16.

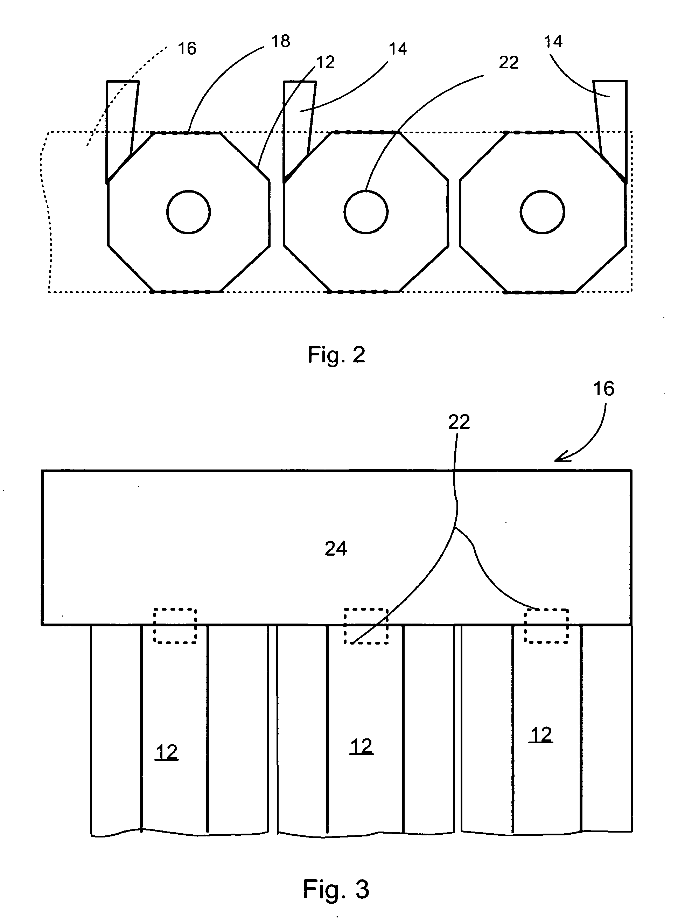

The disclosed apparatus operates in such a way that the fuel supplied to the furnace 10 is combusted and the generated flue gases flow from the furnace 10 together with the ash and the sand that acts as bed material in the furnace through the conduit 14 to the separator 12. The conduit 14 is arranged in the separator 12 substantially tangentially (shown in Fig. 2) in such a way that the mixture of flue gases, ash and sand begins to circulate along the wall of the separator 12. Although the vortex separator used with fluidized bed boilers has traditionally been, first round, and later on quadrate, preferably square, of its cross-section, it is already known in the prior art to use octagonal separators in connection with the fluidized bed boilers. When circulating in the separator 12, the heavier material, i.e. ash and especially sand, accumulates due to the centrifugal force to the circumference of the separator and begins to flow downwards along the walls of the separator, whereby the purified flue gases rise upwards and exit through the conduit 22 at the upper end of the separator to the flue gas channel 16.

Figs. 2 and 3 illustrate a prior art arrangement, which is presumed to have three adjacent separators 12 on one side of the furnace. The drawing uses, as an example, octagonal separators 12. When taking into consideration that in the arrangement in accordance with the prior art disclosed in Fig. 1 the flue gas channel 16 located above the separators 12 has the width equal to the diameter of the separators 12, it is easy to understand from Figs. 2 and 3, how the separators 12 are in fact mounted. Because the bottom of the flue gas channel 16 manufactured preferably as a water/steam tube wall, cannot support the weight of the separator 12 and the ash and sand therein, the only parts, to which the entire separator can be supported, are vertical side walls 24 of the flue gas channel. Fig. 2 illustrates that the only possibility to attach the separator 12 to the flue gas channel 16 is of its horizontal (in Fig. 2) portions, meaning in practice that, on the one hand, only one fourth of the upper circumference of the separator 12 and, on the other hand, only 40% of the length of the side wall of the flue gas channel takes part in the supporting. In other words, both the wall of the separator 12 and the wall 24 of the flue gas channel 16 are subjected to stresses very unevenly.

Furthermore, since the separators may tend to clog in some conditions, i.e., ash and sand tend to accumulate to the gas lock or like at the lower end thereof, the increase in the total weight of the separator will become a problem when the amount of sand and ash is substantially greater than in the ordinary running condition. There the suspending of the separator is subjected to greater stresses than usual. Another problem of the structure in accordance with the prior art, partially related to the above mentioned problem, is that it would be easier to notice the clogging tendency or even the clogging by monitoring the total weight of the separator, but in practice this is not possible, because all adjacent separators are connected to the flue gas channel in such a way that they form a uniform separator bank. The flue gas channel in turn is suspended by means of a great number of hanger rods to the supporting structures, whereby due to the number of hanger rods it is in practice impossible to define at least the weight of a single separator. In the same way, in cases where it has been possible to suspend the separator to the primary steel structures directly by means of hanger rods, the number of the hanger rods has been so great that in connection with such, for practical reasons explained earlier, it has not been possible to use any kind of weight measuring arrangements.

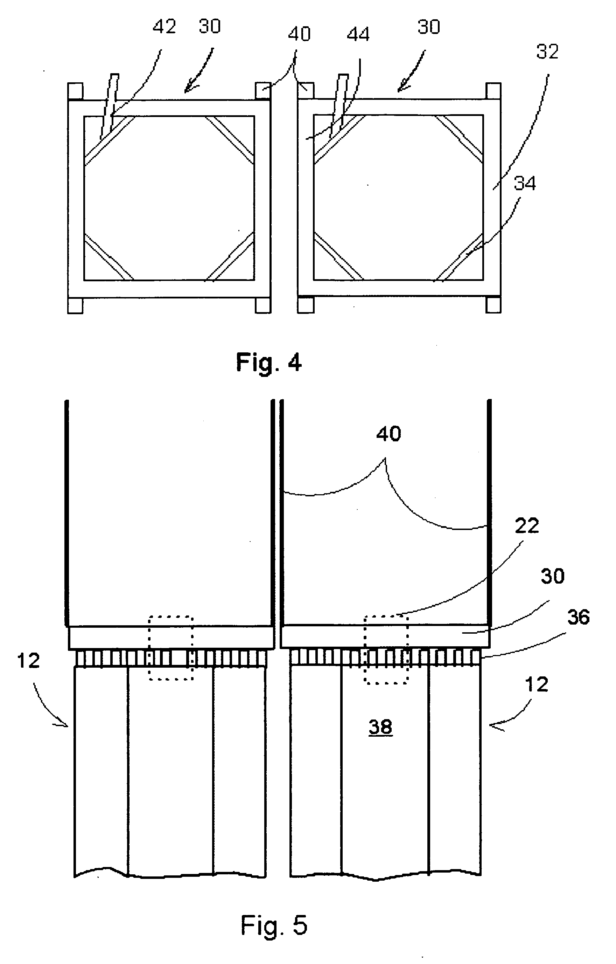

Figs. 4 and 5 disclose thus an arrangement in accordance with a preferred embodiment of the invention for suspending the separators 12 to the supporting structures above (illustrated schematically in Fig. 1 in connection with the prior art) so that separators 12 are supported substantially throughout the whole length of their circumference and that it is possible to monitor accurately enough the weight of an individual separator. Fig. 4 discloses a frame 30 used in the supporting of the separators and Fig. 5 two adjacent separators 12 suspended by means of frames in accordance with the invention.

It is a characteristic feature of an embodiment in accordance with the invention that the support structure of each separator 12 is formed of a frame 30 at least partially corresponding to the cross-sectional form of the separator. The frame is independently suspended and located above the separator 12 substantially to the ceiling or supporting level of the furnace. In other words, both the furnace and the separators can now in the embodiment in accordance with the invention be suspended by suspending means of equal length to the supporting structure. According to the embodiment of Fig. 4, the frame consists of a substantially square main frame 32, inside of which four beams 34 'rounding' the corners of the square have been arranged. The beams form the interior of the frame 30 octagonal corresponding the cross-sectional form of the separator 12 illustrated in Fig. 2. Naturally, if the separator is, for example, hexagonal, the corners of the main frame should be 'rounded' in a different way to result in a hexagonal frame. A large number of suspending means 36 have been arranged to hang downwards from the frame of octagonal inner circumference, the suspending means being attached to the upper circumferential edge of the panel wall 38 of the separator 12. If the separator 12 is formed of water/steam tube wall 38 the suspending means 36 are attached preferably to the wall portion between the water/steam tubes. Suspending means 36 may be arranged, for example, at every second space between the water tubes. In the above, it has also been mentioned a method in which the separator is suspended at intervals of 400 mm in the circumference of the separator. In other words, it is essential that the separator is suspended throughout its entire length of its circumference to the frame. The frame 30 in turn is in the embodiment of the drawing suspended from its corners by four hanger rods or wires 40 to the supporting structure above. If it is desired to arrange the measuring of the weight of the separator 12 in connection with the supporting, it is possible, for example, by providing one or more (preferably all) of the hanger rods or wires 40 of the frame 30 of each separator 12 with a strain gauge or like measuring arrangement reacting to the total mass of the separator 12.

The frame described above is constructed as square to correspond to the cross-sectional form of the separator directly, in other words, for example, hexagonal or octagonal. The frame can also be formed of two portions tightly connected to each other, the first portion corresponding to the cross-section of the separator of its circumference and the second portion being formed to follow the requirements of the suspension as well as possible. Thus, for example, the first portion may be octagonal and the second portion may, for example, be formed of two beams, to which the first portion is attached. The supporting of the separator may thus be preferably taken care of by means of hanger rods arranged at the ends of the beams. The location of the abovementioned beams relative to the octagonal portion of the frame is easily defined, for example, to follow the requirements of the primary steel structure. In other words, the beams may be located, for example, at the ends of the circumferential portions parallel to the wall of the flue gas channel of the octagonal portion, to the inclined portions of the circumference or parallel to the portions of the circumference, which are perpendicular to the direction of the flue gas channel. Naturally, it is possible to support the beams not only to the first portion of the frame, but also to each other by one or more beams preferably parallel to the direction of the flue gas channel. These beams can be located in principle in the same way as the previous beams. Correspondingly, the hanger rods can be arranged either to the corners of the frame, as in the embodiment illustrated in Figs. 4 and 5, or to the straight beam portions of the frame, for example, to the center parts thereof. The number of hanger rods or wires need not be the same as the number of the corners in the frame, but in practice any kind of reasonable amount applies.

Fig. 4 also discloses how the frame 30 is provided with a beam 42 to which an inlet conduit (a corresponding conduit is illustrated in Figs 1 and 2 of the prior art with reference number 14) is suspended with a corner portion 44 of the frame by means of suspending means corresponding to suspending means 36 illustrated in Fig. 5. Preferably, the inlet conduit is substantially tangentially located to the separator, whereby the mixture of flue gases, ash and sand is brought to circulate along the inner surface of the separator. The inlet conduits may be arranged in the manner disclosed in Fig. 4 at the same place relative to each separator. It is, however, also possible, and in some sense even advantageous to arrange the inlet conduits always in pairs in such away that, for example, in case of Fig. 4 the beam 42 in the left frame would be located in the upper right corner of the left frame as a mirror image of the beam 42 of the right frame. Naturally, also the separators connected to the frames there were mirror images of each other.

The structure disclosed in Figs. 4 and 5 makes it also possible to support the flue gas channel to the above described frames. Thereby the flue gas channel will be supported from below and the frame will remain in the space between the flue gas channel and the separator. The supporting of the flue gas channel is carried out naturally by the same hanger rods as the supporting of the separator. When defining the weight of the separator, it also contains part of the weight of the flue gas channel. This does not, however, have any particular significance, since, as a measurement result the weight of the separator together with the sand and ash therein forms a clear majority of the total weight.

Further, there is an advantage gained with the use of a frame in accordance with the invention. Now, the width of the flue gas channel located above the separators is not limited in practice in any way. If for some reason it is desired to have the separator wider, it is easily possible by extending the beams of the frame transverse to the flue gas channels in such a way that the ends thereof extend outside the side surfaces of the channel. Thereby, by means of the hanger rods attached to the ends of the beam, it is possible to suspend the separator further to the primary steel structures. Thus, the frame in accordance with the invention renders it possible to make the boiler building lower, since it is possible to design the flue gas channels having a low and rectangular cross-section. In other words, the structure in accordance with the invention offers a possibility to define the size and shape of the flue gas channel freely.

As becomes clear from above, a separator construction is provided, which is clearly more reliable than the separator constructions of the prior art and applicable for a number of various applications and purposes. It is characteristic of the separator construction that the separator is suspended to the ceiling and suspending structures of the boiler building, in other words to the so called primary steel structure throughout the whole length of the circumference of the separator (in practice at certain intervals) also in a situation where some fluidized bed boiler component is located between the separator and the suspending means in question, the component preventing the direct supporting of the separator from the wall surfaces. It must be borne in mind that the above described merely discloses some preferred embodiments of the invention without a purpose to limit the invention from what is defined in the accompanying claims, which alone define the scope of invention. Thus, it is, for example, clear that the embodiment in accordance with the invention may be applied to suspending separators of any cross-sectional form.

## Claims

1. A separator construction connectable to a fluidized bed boiler for circulating bed material and returning it to the furnace of the fluidized bed boiler, the separator construction comprising walls (38), a ceiling, an inlet conduit (14), an outlet conduit (22) in flow communication with a flue gas channel (16) located above the separator, and suspending means to suspend the separator to hang from a supporting structure (18) in the upper part of the boiler building, **characterized in that** the suspending means are formed of a frame (30) arranged between the flue gas channel (16) and the separator (12) and having an interior corresponding the cross-sectional form of the separator, specific suspending means (36) hanging downwards from the interior of the frame and being connected with an upper circumference of the wall (38) of the separator (12), and hanger rods or wires (40) connecting the frame (30) directly to the supporting structures (18).

2. Separator construction in accordance with claim 1, **characterized in that** the frame (30) is located substantially at the height of the ceiling of the furnace (10)

3. Separator construction in accordance with claim 1, **characterized in that** means for defining the mass of the separator (12) are provided in connection with the hanger rods or wires (40).

4. Separator construction in accordance with claim 1, **characterized in that** the flue gas channel is supported to the supporting structures (18) by means of the frame (30).

5. Separator construction in accordance with claim 4, **characterized in that** the flue gas channel (16) is located substantially parallel to the side wall of the furnace (10) in the fluidized bed boiler in such a way that the flue gas channel (16) is connected by means of conduits (22) to a plurality of separators (12).

6. Separator construction in accordance with claim 4, **characterized in that** the width of the flue gas channel is greater than the diameter of the separator (12).

7. Separator construction in accordance with claim 1, **characterized in that** the separator (12) is octagonal in cross-section.

## Patentansprüche

1. Abscheiderkonstruktion, die an einen Wirbelschichtkessel anschließbar ist zur Zirkulierung von Bettmaterial und Rückführung desselben in die Feuerung des Wirbelschichtkessels, welche Abscheiderkonstruktion Wände (38), eine Decke, einen Einlasskanal (14), einen Auslasskanal (22) in Fließverbindung mit einem oberhalb des Abscheiders angeordneten Rauchgaskanal (16), und Aufhängungen zum Aufhängen des Abscheiders von einer Stützkonstruktion (18) im oberen Teil des Kesselhauses umfasst, **dadurch gekennzeichnet, dass** die Aufhängungen gebildet sind aus einem Rahmen (30), der zwischen dem Rauchgaskanal (16) und dem Abscheider (12) angeordnet ist und ein Inneres aufweist, das der Querschnittsform des Abscheiders entspricht, speziellen Aufhängungen (36), die von der Innenseite des Rahmens herunterhängen und mit einer oberen Peripherie der Wand (38) des Abscheiders (12) verbunden sind, und Hängestangen oder Drähten (40), die den Rahmen (30) direkt mit den Stützkonstruktionen (18) verbinden.

2. Abscheiderkonstruktion nach Patentanspruch 1, **dadurch gekennzeichnet, dass** der Rahmen (30) im Wesentlichen auf Höhe der Decke der Feuerung (10) positioniert ist.

3. Abscheiderkonstruktion nach Patentanspruch 1, **dadurch gekennzeichnet, dass** Mittel zur Festlegung der Masse des Abscheiders (12) in Verbindung mit den Hängestangen oder Drähten (40) vorgesehen sind.

4. Abscheiderkonstruktion nach Patentanspruch 1, **dadurch gekennzeichnet, dass** der Rauchgaskanal mittels eines Rahmens (30) an den Stützkonstruktionen (18) abgestützt ist.

5. Abscheiderkonstruktion nach Patentanspruch 4, **dadurch gekennzeichnet, dass** der Rauchgaskanal (16) im Wesentlich parallel zur Seitenwand der Feuerung (10) im Wirbelschichtkessel auf solche Weise angeordnet ist, dass der Rauchgaskanal (16) über Kanäle (22) mit einer Vielzahl Abscheider (12) verbunden ist.

6. Abscheiderkonstruktion nach Patentanspruch 4, **dadurch gekennzeichnet, dass** die Breite des Rauchgaskanals größer als der Durchmesser des Abscheiders (12) ist.

7. Abscheiderkonstruktion nach Patentanspruch 1, **dadurch gekennzeichnet, dass** der Abscheider (12) in Querschnitt achteckig ist.

## Revendications

1. Montage de séparateur pouvant être raccordé à une chaudière à lit fluidisé pour faire circuler un matériau de lit et le renvoyer vers le foyer de la chaudière à lit fluidisé, le montage de séparateur comportant des parois (38), un plafond, un conduit d'admission (14), un conduit de sortie (22) en communication d'écoulement avec un canal de gaz de fumée (16) placé au-dessus du séparateur, et des moyens de suspension pour placer le séparateur en suspension à partir d'une structure de support (18) dans la partie supérieure de l'assemblage de la chaudière, **caractérisé en ce que** les moyens de suspension sont formés d'un bâti (30) disposé entre le canal des gaz de fumée (16) et le séparateur (12) et présentant une partie interne correspondant à la forme de section transversale du séparateur, des moyens de suspension spécifiques (36) pendant vers le bas à partir de l'intérieur du bâti et étant raccordés à une circonférence supérieure de la paroi (38) du séparateur (12), et des tiges ou des câbles de suspension(40) raccordant le bâti (30) directement aux structures de support (18).

2. Montage de séparateur selon la revendication 1, **caractérisé en ce que** le bâti (30) est placé essentiellement au niveau de la hauteur du plafond du foyer (10).

3. Montage de séparateur selon la revendication 1, **caractérisé en ce que** des moyens pour définir la masse du séparateur (12) sont prévus en liaison avec les tiges ou les câbles de suspension (40).

4. Montage de séparateur selon la revendication 1, **caractérisé en ce que** le canal des gaz de fumée est supporté sur les structures de support (18) au moyen du bâti (30).

5. Montage de séparateur selon la revendication 4, **caractérisé en ce que** le canal des gaz de fumée (16) est placé essentiellement parallèlement à la paroi latérale du foyer (10) dans la chaudière à lit fluidisé d'une manière telle que le canal des gaz de fumée (16) est raccordé au moyen des conduits (22) à une pluralité de séparateurs (12).

6. Montage de séparateur selon la revendication 4, **caractérisé en ce que** la largeur du canal des gaz de fumée est plus grande que le diamètre du séparateur (12).

7. Montage de séparateur selon la revendication 1, **caractérisé en ce que** le séparateur (12) présente une section transversale octogonale.
